# EUROPÄISCHE PATENTSCHRIFT

(11) **EP 4 389 979 B1**
(45) Veröffentlichungstag und Bekanntmachung des Hinweises auf die Patenterteilung: **09.04.2025**
(21) Anmeldenummer: 23213186.2
(22) Anmeldetag: 30.11.2023
(51) Int. Cl.: E01C 19/28, E02D 3/026

(54) **BODENBEARBEITUNGSWALZE**
SOIL WORKING ROLLER
ROULEAU DE TRAITEMENT DU SOL

(30) Priorität: 19.12.2022 DE 102022133785
(43) Veröffentlichungstag der Anmeldung: 26.06.2024
(73) Patentinhaber: Hamm AG, 95643 Tirschenreuth (DE)
(72) Erfinder: Rath, Günter, Krummennaab (DE)
(74) Vertreter: Ruttensperger Lachnit Trossin Gomoll

(56) Entgegenhaltungen:
- DE-A1- 1 910 031
- JP-A- H06 287 908

## Beschreibung

Die vorliegende Erfindung betrifft eine Bodenbearbeitungswalze, die beispielsweise dazu eingesetzt werden kann, einen Boden, wie zum Beispiel Asphalt, zu verdichten.

Um insbesondere beim Verdichten von Asphalt einen höheren und gleichmäßigeren Verdichtungsgrad erreichen zu können, ist es bekannt, Bodenbearbeitungswalzen zur Durchführung derartiger Verdichtungsvorgänge einzusetzen, welche eine Unwuchtanordnung mit einer Mehrzahl von mit Umfangsabstand um die Walzendrehachse zueinander angeordneten Unwuchtmassen aufweist, wobei jede Unwuchtmasse zur Drehung um eine dieser zugeordnete Unwuchtdrehachse antreibbar ist. Durch die Rotation diese Unwuchtmassen kann, je nach Phasenlage und Drehrichtung der Unwuchtmassen bzw. der Massenschwerpunkte derselben zueinander, im Oszillationsbetrieb der Rotationsbewegung einer derartigen Bodenbearbeitungswalze um die Walzendrehachse derselben ein im Wesentlichen tangential wirkendes Oszillationsdrehmoment überlagert werden, oder im Vibrationsbetrieb eine zur Walzendrehachse im Wesentlichen orthogonale Kraft auf die Bodenbearbeitungswalze ausgeübt werden.

Die verschiedenen zur Erlangung eines derartigen Oszillationsbetriebs oder Vibrationsbetriebs vorgesehenen Komponenten sind im Wesentlichen in einem von einem Walzenmantel umgebenen Walzeninnenraum einer derartigen Bodenbearbeitungswalze positioniert und bewegbar. Um für diese in verschiedenen Lagerbereichen drehbar gelagerten rotierenden oder/und ein Drehmoment übertragenden Komponenten eine ausreichende Schmierung vorzusehen, ist es erforderlich, im Walzeninnenraum Schmiermittel bzw. eine Schmiermittelzirkulation vorzuhalten.

Eine Bodenbearbeitungswalze gemäß dem Oberbegriff des Anspruchs 1 ist aus der JP H06 287908 A bekannt. Bei dieser Bodenbearbeitungswalze ist konzentrisch zu einem Walzenmantel in einem von dem Walzenmantel umgebenen Volumen ein inneres Gehäuse angeordnet, in welchem zwei Unwuchtmassen um zu einer Drehachse des Walzenmantels exzentrische Drehachsen drehbar angeordnet sind. Zwischen dem inneren Gehäuse und dem Walzenmantel ist ein ringartiges Volumen gebildet, welches in seinem in der Höhenrichtung unter der Walzendrehachse liegenden Bereich einen ersten Schmiermittelsumpf bildet, in welchen der in Höhenrichtung untere Bereich des inneren Gehäuses eintaucht. In einem in der Höhenrichtung unter der Walzendrehachse liegenden Bereich des inneren Gehäuses ist in diesem ein zweiter Schmiermittelsumpf gebildet. Das obere Niveau des zweiten Schmiermittelsumpfs liegt in der Höhenrichtung über dem oberen Niveau des ersten Schmiermittelsumpfs. Bei Rotation der Bodenbearbeitungswalze bewegen die zur Walzendrehachse exzentrisch positionierten Unwuchtmassen sich insbesondere mit den diese drehbar lagernden Lagerbereichen wiederholt durch das im zweiten Schmiermittelsumpf vorhandene Schmiermittel hindurch. Durch einen Wärmeübertrag auf das im ersten Schmiermittelsumpf vorhandene Schmiermittel über das innere Gehäuse hinweg wird eine übermäßige Erwärmung des im ersten Schmiermittelsumpf vorhandenen Schmiermittels vermieden.

Die DE 19 10 031 A1 offenbart eine Bodenbearbeitungswalze, bei welcher im Inneren eines Walzenmantels in einem in einer Höhenrichtung unteren Bereich ein Schmiermittelsumpf gebildet ist. Im Verlaufe der Rotation der Bodenbearbeitungswalze wird wiederholt Schmiermittel aus dem Schmiermittelsumpf in einen Bereich gefördert, in welchem eine zu einer Walzendrehachse konzentrisch drehbare Unwuchtmassen in ihren beiden axialen Endbereichen gelagert ist.

Es ist die Aufgabe der vorliegenden Erfindung, eine Bodenbearbeitungswalze, insbesondere für einen Bodenverdichter, vorzusehen, bei welcher eine zuverlässige Schmierung von in verschiedenen radialen Bereichen bezüglich einer Walzendrehachse der Bodenbearbeitungswalze in einem Walzeninnenraum vorgesehenen Komponenten erreicht wird.

Erfindungsgemäß wird diese Aufgabe gelöst durch eine Bodenbearbeitungswalze, insbesondere für einen Bodenverdichter, umfassend:
- einen um eine Walzendrehachse drehbaren, einen Walzeninnenraum umgebenden Walzenmantel,
- eine Unwuchtanordnung mit einer Mehrzahl von mit Umfangsabstand um die Walzendrehachse zueinander angeordneten Unwuchtmassen, wobei jede Unwuchtmasse zur Drehung um eine dieser zugeordnete Unwuchtdrehachse antreibbar ist,
- einen Unwuchtantrieb mit einem Unwuchtmotor und einem Unwuchtgetriebesystem, wobei das Unwuchtgetriebesystem wenigstens ein durch den Unwuchtmotor zur Drehung antreibbares Antriebszahnrad und in Zuordnung zu jeder Unwuchtmasse ein mit dieser zur gemeinsamen Drehung verbundenes Abtriebszahnrad umfasst, wobei jedes Antriebszahnrad mit wenigstens einem Abtriebszahnrad zur Drehmomentübertragung gekoppelt ist,
- einen in einer Höhenrichtung unter der Walzendrehachse angeordneten ersten Schmiermittelsumpf, wobei der erste Schmiermittelsumpf bis zu einem in der Höhenrichtung einen ersten Abstand zur Walzendrehachse aufweisenden ersten Schmiermittelsumpfniveau mit Schmiermittel gefüllt oder füllbar ist,
- einen in der Höhenrichtung unter der Walzendrehachse angeordneten zweiten Schmiermittelsumpf, wobei der zweite Schmiermittelsumpf bis zu einem in der Höhenrichtung einen zweiten Abstand zur Walzendrehachse aufweisenden zweiten Schmiermittelsumpfniveau mit Schmiermittel gefüllt oder füllbar ist, wobei der zweite Abstand kleiner ist als der erste Abstand,
- eine Schmiermittelförderanordnung zum Fördern von Schmiermittel aus dem ersten Schmiermittelsumpf in den zweiten Schmiermittelsumpf,
- eine Überlaufverbindung zwischen dem ersten Schmiermittelsumpf und dem zweiten Schmiermittelsumpf, wobei im Förderbetrieb der Schmiermittelförderanordnung bei Erreichen oder/und Überschreiten des zweiten Schmiermittelsumpfniveaus im zweiten Schmiermittelsumpf Schmiermittel von dem zweiten Schmiermittelsumpf über die Überlaufverbindung in den ersten Schmiermittelsumpf strömt.

Durch das Bereitstellen zweier radial gestaffelt liegender Schmiermittelsümpfe wird im Bereich der durch diese Schmiermittelsümpfe abgedeckten radialen Niveaus die Möglichkeit geschaffen, dort sich befindende bzw. durch diese Bereiche sich hindurch bewegende Komponenten mit Schmiermittel zu benetzen und somit vor übermäßiger Belastung bzw. Alterung zu schützen. Gleichzeitig wird durch diese radiale Staffelung der Schmiermittelsümpfe und die Förderung von Schmiermittel aus dem ersten Schmiermittelsumpf in den zweiten Schmiermittelsumpf sowie die Möglichkeit, überschüssiges Schmiermittel aus dem zweiten Schmiermittelsumpf wieder in den ersten Schmiermittelsumpf abgeben zu können, eine kaskadenartige Anordnung der Schmiermittelsümpfe mit einer durch diese hindurch geleiteten Zirkulation des Schmiermittel erreicht. Somit können bei vergleichsweise geringer Menge des insgesamt eingesetzten Schmiermittels und somit vermiedener Notwendigkeit, den Walzeninnenraum in Übermaß mit Schmiermittel zu füllen, in verschiedenen Radialabständen zur Walzendrehachse positionierte Systembereiche zuverlässig mit der für deren Schmierung erforderlichen Schmiermittelmenge versorgt werden.

Für eine verschleißarme und zuverlässige Drehmomentübertragung kann wenigstens ein Antriebszahnrad, vorzugsweise jedes Antriebszahnrad, mit wenigstens einem Abtriebszahnrad in Kämmeingriff stehen, oder/und kann wenigstens ein Abtriebszahnrad, vorzugsweise jedes Abtriebszahnrad, mit der diesem zugeordneten Unwuchtmasse zur gemeinsamen Drehung um die Unwuchtdrehachse dieser Unwuchtmasse verbunden sein. Um vermittels der Unwuchtanordnung die zur Walzendrehachse tangentiale beziehungsweise orthogonale Wirkrichtung erzeugen zu können, wird vorgeschlagen, dass die Unwuchtdrehachse wenigstens einer Unwuchtmasse, vorzugsweise jeder Unwuchtmasse, zur Walzendrehachse exzentrisch oder/und parallel ist. Dies führt zu einer effizienten Schmierung von in verschiedenen Höhenbereichen bzw. radialen Niveaus bezüglich der Walzendrehachse angeordneten Komponenten bei Einsatz einer vergleichsweise geringen Schmiermittelmenge und vermeidet somit die Notwendigkeit, den Walzeninnenraum mit einer übermäßig großen Menge an Schmiermittel aufzufüllen.

Um durch die Schmiermittelförderanordnung aus dem ersten Schmiermittelsumpf nach oben gefördertes bzw. verteiltes Schmiermittel auffangen und in den zweiten Schmiermittelsumpf leiten zu können, wird vorgeschlagen, dass in der Höhenrichtung über der Walzendrehachse eine in der Höhenrichtung nach oben offene Schmiermittelauffangeinheit vorgesehen ist, und dass eine Schmiermittelströmungsverbindung zwischen der Schmiermittelauffangeinheit und dem zweiten Schmiermittelsumpf zum Leiten von in der Schmiermittelauffangeinheit aufgefangenem Schmiermittel in den zweiten Schmiermittelsumpf vorgesehen ist.

Für eine effiziente Auffangwirkung kann die Schmiermittelauffangeinheit ein wannenartiges, vorzugsweise in der Höhenrichtung nach oben sich trichterartig erweiterndes Schmiermittelauffangelement umfassen.

Der Walzenmantel kann an einer Trägeranordnung um die Walzendrehachse drehbar getragen sein, wobei die Trägeranordnung einen mit dem Walzenmantel drehfest verbundenen drehbaren Trägeranordnungsteil und einen den drehbaren Trägeranordnungsteil drehbar tragenden feststehenden Trägeranordnungsteil umfasst. Dabei können der erste Schmiermittelsumpf und der zweite Schmiermittelsumpf in einem in der Trägeranordnung ausgebildeten Trägeranordnungsinnenraum vorgesehen sein. Dadurch wird die Möglichkeit geschaffen, die beiden Schmiermittelsümpfe in den beiden Trägeranordnungsteilen gegen den Austritt von Schmiermittel nach außen abgeschlossen vorzusehen.

Um eine effiziente Nutzung des in der Trägeranordnung bereitgestellten Innenraums zu erreichen, wird vorgeschlagen, dass erste Schmiermittelsumpf im Wesentlichen vollständig in dem drehbaren Trägeranordnungsteil vorgesehen ist, oder/und dass der zweite Schmiermittelsumpf im Wesentlichen vollständig in dem feststehenden Trägeranordnungsteil vorgesehen ist.

Zur Kraftübertragungskopplung bzw. zur Drehmomentübertragungskopplung mit dem Walzenmantel können die Unwuchtmassen an dem drehbaren Trägeranordnungsteil, an welchem auch der Walzenmantel getragen ist, um deren Unwuchtdrehachsen drehbar getragen sein.

Das wenigstens eine Antriebszahnrad und die Abtriebszahnräder können in einem im Wesentlichen in dem drehbaren Trägeranordnungsteil ausgebildeten ersten Bereich des Trägeranordnungsinnenraums angeordnet sein. Damit wird es möglich, insbesondere dann, wenn in diesem Bereich auch der erste Schmiermittelsumpf vorgesehen ist, ein in der Höhenrichtung unter der Walzendrehachse positioniertes Abtriebszahnrad wenigstens teilweise in dem ersten Schmiermittelsumpf zu positionieren. Es ist in diesem Zusammenhang darauf hinzuweisen, dass bei Rotation der Bodenbearbeitungswalze um deren Walzendrehachse auch die Unwuchtmassen sich mit ihren Unwuchtdrehachsen um die Walzendrehachse bewegen und dabei sukzessive in eine derartige Position unter der Walzendrehachse und in dem ersten Schmiermittelsumpf gelangen.

Um zu gewährleisten, dass die Schmiermittelauffangeinheit immer in einem in der Höhenrichtung oberen bzw. über der Walzendrehachse liegenden Bereich positionieret ist, wird vorgeschlagen, dass die Schmiermittelauffangeinheit an dem feststehenden Trägeranordnungsteil vorgesehen ist, und dass die Schmiermittelströmungsverbindung in dem feststehenden Trägeranordnungsteil oder/und in einem im Wesentlichen in dem feststehenden Trägeranordnungsteil ausgebildeten zweiten Bereich des Trägeranordnungsinnenraums ausgebildet ist.

Um in einfacher Weise eine Strömungsverbindung zwischen den beiden Schmiermittelsümpfen bereitstellen zu können, wird vorgeschlagen, dass an dem feststehenden Trägeranordnungsteil ein den zweiten Schmiermittelsumpf in Richtung der Walzendrehachse begrenzendes Begrenzungselement vorgesehen ist, und dass in dem Begrenzungselement wenigstens eine Schmiermitteldurchtrittsöffnung der Überlaufverbindung vorgesehen ist.

Um in einfacher Weise einen Antriebszugriff auf das wenigstens eine Antriebszahnrad zu ermöglichen, kann die Walzendrehachse die Schmiermitteldurchtrittsöffnung durchsetzen oder/und kann die Schmiermitteldurchtrittsöffnung zur Walzendrehachse im Wesentlichen konzentrisch angeordnet sein.

Zum Antreiben der Unwuchtmassen kann das Unwuchtgetriebesystem zwei Antriebszahnräder und eine Unwuchtgetriebeeinheit umfassen, wobei wenigstens eines der Antriebszahnräder durch den Unwuchtmotor über die Unwuchtgetriebeeinheit zur Drehung antreibbar ist.

Bei einer besonders vorteilhaften Ausgestaltung kann eines der Antriebszahnräder durch den Unwuchtmotor über die Unwuchtgetriebeeinheit zur Drehung um eine zur Walzendrehachse vorzugsweise konzentrische Antriebszahnraddrehachse antreibbar sein, und ein anderes der Antriebszahnräder kann durch den Unwuchtmotor direkt zur Drehung um die Antriebszahnraddrehachse antreibbar sein. Es ist in diesem Zusammenhang darauf hinzuweisen, dass eine direkte Antriebsverbindung bedeutet, dass das so angetriebene Antriebszahnrad ohne der Möglichkeit einer Drehzahlübersetzung oder Drehrichtungsumkehr oder Änderung der Phasenlage mit einem Antriebsorgan des Unwuchtmotors zur gemeinsamen Drehung gekoppelt ist, wozu beispielsweise auch ein Drehmoment übertragende Wellen oder dergleichen eingesetzt werden können.

Die Unwuchtgetriebeeinheit kann als Drehlage-Verstellgetriebe ausgebildet sein, wobei durch die Unwuchtgetriebeeinheit eine Drehlage des einen der Antriebszahnräder um die Antriebszahnraddrehachse bezüglich einer Drehlage des anderen der Antriebszahnräder um die Antriebszahnraddrehachse verstellbar ist. Beispielsweise kann die Unwuchtgetriebeeinheit ein Planetengetriebe umfassen. Bei derartiger Ausgestaltung ist vorzugsweise auch vorgesehen, dass durch die Unwuchtgetriebeeinheit selbst keine Änderung der Drehzahl herbeigeführt wird bzw. das durch diese zur Drehung angetriebene Antriebszahnrad mit der gleichen Drehzahl rotiert, wie das durch den Unwuchtmotor direkt angetriebene Antriebszahnrad. Nur in einer Phase, in welcher eine Änderung der relativen Drehlage der beiden Antriebszahnräder bewirkt werden soll, weisen diese unvermeidbar vorübergehend unterschiedlichen Drehzahlen auf.

Für eine kompakte Ausgestaltung kann die Unwuchtgetriebeeinheit in einem im Wesentlichen in dem feststehenden Trägeranordnungsteil ausgebildeten zweiten Bereich des Trägeranordnungsinnenraums angeordnet sein.

Um vermittels des zweiten Schmiermittelsumpfes insbesondere die Unwuchtgetriebeeinheit bzw. Komponenten derselben schmieren zu können, kann ein in der Höhenrichtung unter der Walzendrehachse positionierter Teil der Unwuchtgetriebeeinheit wenigstens teilweise in dem zweiten Schmiermittelsumpf positioniert sein. Auch ist zu berücksichtigen, dass im Arbeitsbetrieb aufgrund der Bewegung von Komponenten der Unwuchtgetriebeeinheit um die Walzendrehachse diese periodisch in den Bereich des zweiten Schmiermittelsumpfes gelangen und dort mit Schmiermittel benetzt werden können.

Für eine einfach auszugestaltende, gleichwohl effizient arbeitende Schmiermittelförderanordnung kann diese wenigstens ein Abtriebszahnrad, vorzugsweise alle Abtriebszahnräder, oder/und wenigstens ein Antriebszahnrad, vorzugsweise alle Antriebszahnräder, umfassen.

Für eine effiziente Förderwirkung kann weiter vorgesehen sein, dass die Schmiermittelförderanordnung eine Mehrzahl von an dem drehbaren Trägeranordnungsteil vorgesehenen Fördervorsprüngen umfasst.

Die Erfindung betrifft ferner eine Bodenbearbeitungsmaschine, insbesondere Bodenverdichter, umfassend wenigstens eine erfindungsgemäß aufgebaute Bodenbearbeitungswalze.

Die vorliegende Erfindung wird nachfolgend mit Bezug auf die beiliegenden Zeichnungen detailliert beschrieben. Es zeigt:
- Fig. 1: eine Seitenansicht einer als Bodenverdichter ausgebildeten Bodenbearbeitungsmaschine mit einer Bodenbearbeitungswalze;
- Fig. 2: eine Längsschnittansicht einer bei der Bodenbearbeitungsmaschine der Fig. 1 einsetzbaren Bodenbearbeitungswalze;
- Fig. 3: eine Axialansicht der Bodenbearbeitungswalze der Fig. 2, welche die Schnittebene der Fig. 2 veranschaulicht;
- Fig. 4: das Detail IV in Fig. 2 vergrößert;
- Fig. 5: eine perspektivische, teilweise geschnitten dargestellte Teil-Ansicht der Bodenbearbeitungswalze der Fig. 2;
- Fig. 6: eine perspektivische Ansicht eines Schmiermittelauffangelements der Bodenbearbeitungswalze der Fig. 2;
- Fig. 7: eine Stirnansicht des Schmiermittelauffangelements der Fig. 6 in Blickrichtung VII in Fig. 6;
- Fig. 8: eine Seitenansicht des Schmiermittelauffangelements der Fig. 6 in Blickrichtung VIII in Fig. 6;
- Fig. 9: eine Längsschnittansicht des Schmiermittelauffangelements der Fig. 6, geschnitten längs einer Linie IX-IX in Fig. 8;
- Fig. 10: eine Querschnittansicht des Schmiermittelauffangelements der Fig. 6, geschnitten längs einer Linie X-X in Fig. 7.

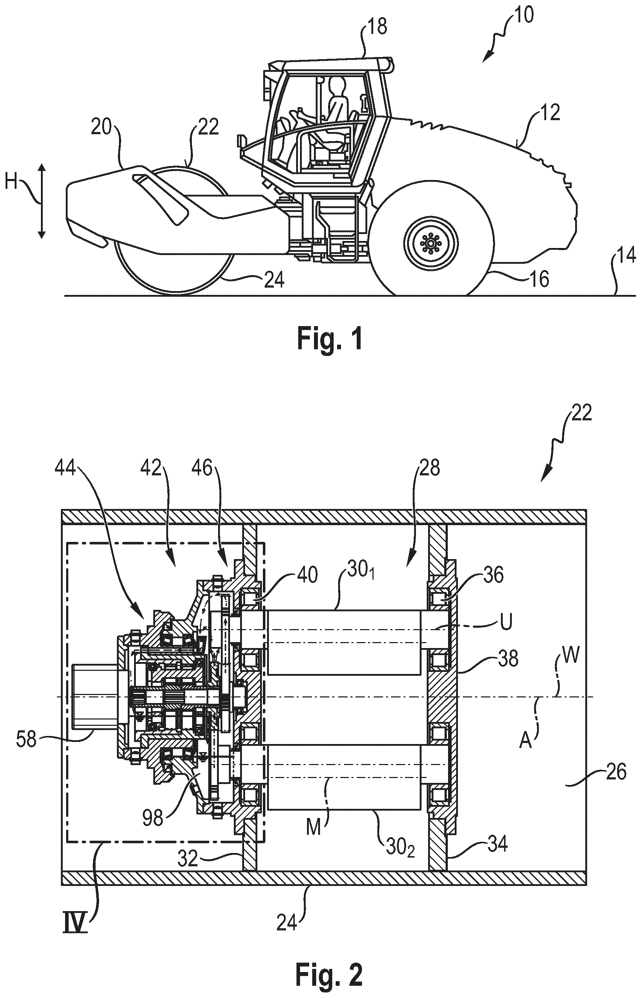

In Fig. 1 ist eine als Bodenverdichter ausgebildete Bodenbearbeitungsmaschine allgemein mit 10 bezeichnet. Die Bodenbearbeitungsmaschine 10 umfasst einen Hinterwagen, 12 an welchem ein Antriebsaggregat und durch dieses zum Bewegen der Bodenbearbeitungsmaschine 10 auf einem Untergrund 14 antreibbare Antriebsräder 16 vorgesehen sind. Am Hinterwagen 12 ist ferner ein allgemein mit 18 bezeichneter Bedienstand vorgesehen, von welchem aus eine Bedienperson die Bodenbearbeitungsmaschine 10 steuern kann.

Mit dem Hinterwagen 12 ist ein allgemein mit 20 bezeichneter Vorderwagen gelenkig verbunden. Am Vorderwagen 20 ist eine Bodenbearbeitungswalze 22 um eine zur Zeichenebene der Fig. 1 orthogonale Walzendrehachse drehbar getragen. Der Vorderwagen 20 umgibt die Bodenbearbeitungswalze 22 rahmenartig. In ihren beiden axialen Endbereichen ist die Bodenbearbeitungswalze 22 beispielsweise über elastische Aufhängungen am Vorderwagen 20 getragen.

Es ist darauf hinzuweisen, dass die in Fig. 1 dargestellte Bodenbearbeitungsmaschine 10 nur ein Beispiel einer derartigen Bodenbearbeitungsmaschine veranschaulicht. Beispielsweise könnte bei einer Bodenbearbeitungsmaschine auch am Hinterwagen 12 eine Bodenbearbeitungswalze vorgesehen sein, und insbesondere bei Ausgestaltung mit zwei Bodenbearbeitungswalzen kann zum Voranbewegen der Bodenbearbeitungsmaschine 10 auf dem Untergrund 14 zumindest eine vorzugsweise jede Bodenbearbeitungswalze zur Drehung angetrieben sein. Auch bei der in Fig. 1 dargestellten Bodenbearbeitungsmaschine 10 kann die Bodenbearbeitungswalze 22 durch einen dieser zugeordneten Walzenantriebsmotor zur Drehung um deren Walzendrehachse angetrieben sein. Die Bewegung der Bodenbearbeitungsmaschine 10 über dem Untergrund 14 kann jedoch auch allein durch Antreiben der Antriebsräder 16 erzeugt werden.

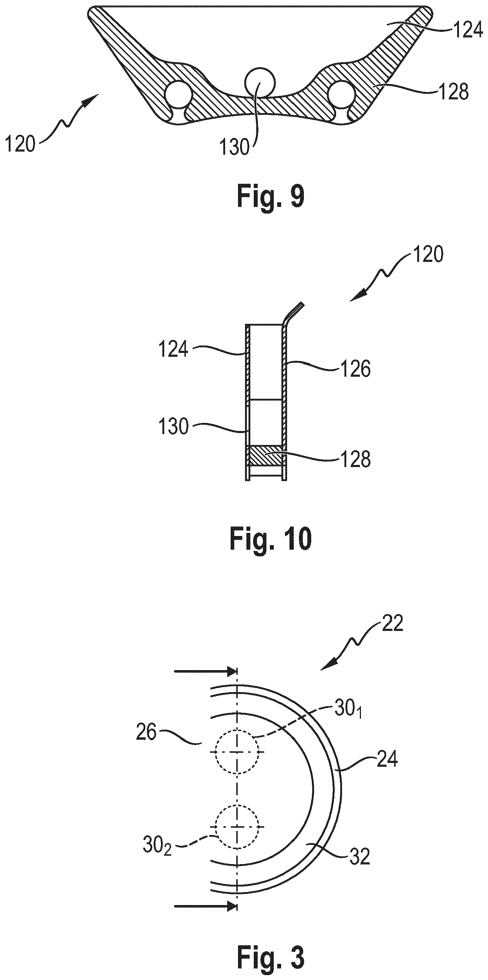

Die Fig. 2 bis 5 zeigen den Aufbau einer bei der Bodenbearbeitungsmaschine 10 einsetzbaren Bodenbearbeitungswalze 22. Die Bodenbearbeitungswalze 22 umfasst einen die Walzendrehachse W derselben umgebenden, zylindrischen Walzenmantel 24, welcher einen Walzeninnenraum 26 umgibt bzw. nach radial außen abschließt.

Im Walzeninnenraum 26 ist eine allgemein mit 28 bezeichnete Unwuchtanordnung vorgesehen. Die Unwuchtanordnung 28 umfasst im dargestellten Ausgestaltungsbeispiel zwei mit Umfangsabstand um die Walzendrehachse W zueinander angeordnete bzw. bezüglich der Walzendrehachse W einander gegenüberliegend angeordnete Unwuchtmassen 30₁, 30₂. Jede der Unwuchtmassen 30₁, 30₂ ist um eine zur Walzendrehachse W parallele und zu dieser exzentrische Unwuchtdrehachse U drehbar, wobei vorzugsweise die Unwuchtdrehachsen U der Unwuchtmassen 30₁, 30₂ zur Walzendrehachse W den gleichen Radialabstand aufweisen. Die Unwuchtmassen 30₁, 30₂ sind zur Drehung um die jeweilige Unwuchtdrehachse U antreibbar, so dass ein bezüglich der jeweiligen Unwuchtdrehachse U jeweils exzentrisch liegender Massenschwerpunkt M der Unwuchtmassen 30₁, 30₂ um die jeweils zugeordnete Unwuchtdrehachse U rotiert.

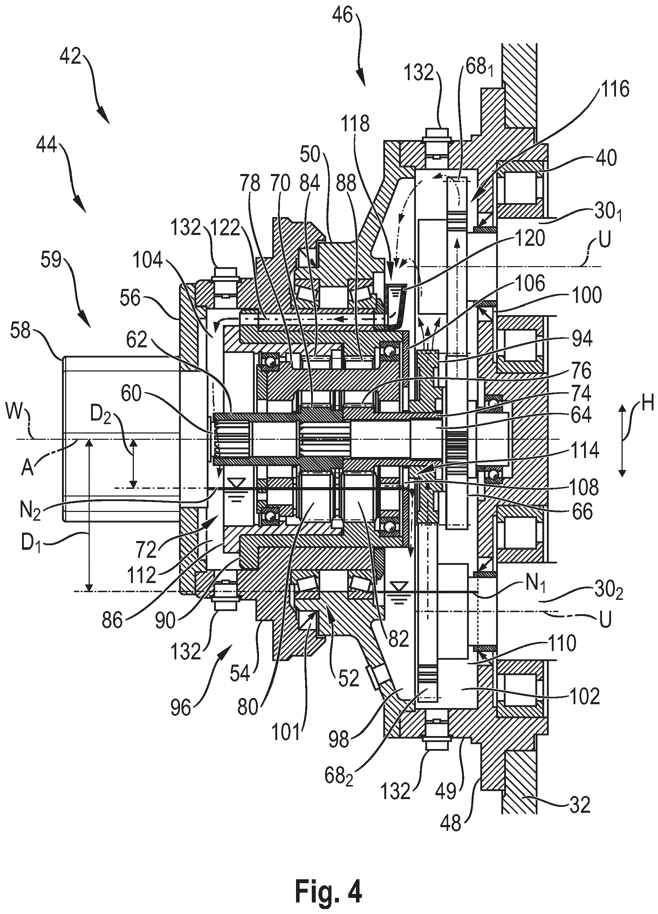

Die Unwuchtmassen 30₁, 30₂ der Unwuchtanordnung 28 sind im Walzeninnenraum 26 an ihren beiden axialen Endbereichen über jeweilige Lageranordnungen 36, 40 drehbar getragen. Dazu sind im Walzeninnenraum 26 zwei in axialem Abstand entlang der Walzendrehachse W zueinander angeordnete und an der Innenseite des Walzenmantels 24 beispielsweise durch Verschweißen festgelegte, allgemein auch als Ronden bezeichnete Trägerringe 32, 34 vorgesehen. An dem in Fig. 2 rechts erkennbaren Trägerring 34 sind die Unwuchtmassen 30₁, 30₂ über Lagereinheiten 36 an einer an dem Trägerring 34 beispielsweise durch Verschraubung festgelegten Trägerscheibe 38 drehbar getragen. An den in Fig. 2 links erkennbaren Endbereichen sind die Unwuchtmassen 30₁, 30₂ über jeweilige Lagereinheiten 40 an einer nachfolgend insbesondere auch mit Bezug auf die Fig. 4 detailliert beschriebenen Trägeranordnung 42 drehbar getragen.

Die in Fig. 4 detaillierter erkennbare Trägeranordnung 42 umfasst einen allgemein mit 44 bezeichneten feststehenden Trägeranordnungsteil, welcher beispielsweise über eine vorangehend bereits angesprochene elastische Aufhängung an dem Vorderwagen 20 getragen sein kann. Der feststehende Trägeranordnungsteil 44 ist somit nicht um die Walzendrehachse W drehbar. Die Trägeranordnung 44 umfasst ferner einen allgemein mit 46 bezeichneten drehbaren Trägeranordnungsteil, welcher bei Rotation der Bodenbearbeitungswalze 22 um die Walzendrehachse W rotiert.

Der drehbare Trägeranordnungsteil 44 umfasst ein im Wesentlichen scheibenartiges Gehäuseteil 48, das in seinem radial äußeren Bereich beispielsweise durch Verschraubung an dem Trägerring 32 festgelegt ist und an welchem die Unwuchtmassen 30₁, 30₂ über die Lagereinheiten 40 drehbar getragen sind.

An einem zylindrischen Ansatz 49 des Gehäuseteils 48 ist ein weiteres, im Wesentlichen scheibenartiges Gehäuseteil 50 des drehbaren Trägeranordnungsteils 46 in seinem radial äußeren Bereich beispielsweise durch Verschraubung festgelegt. An seinem radial inneren Bereich ist das Gehäuseteil 50 über eine allgemein mit 52 bezeichnete Lagereinheit an einem im Wesentlichen ringartigen und in Richtung der Walzendrehachse W langgestreckten Gehäuseteil 54 des feststehenden Trägeranordnungsteils 44 um die Walzendrehachse W drehbar gelagert.

An einem an dem Gehäuseteil 54 des feststehenden Trägeranordnungsteils 44 beispielsweise durch Verschraubung festgelegten Abschlussdeckel 56 ist ein Unwuchtmotor 58 eines Unwuchtantriebs 59 getragen. Der Unwuchtmotor 58 kann beispielsweise ein Hydraulikmotor oder Elektromotor sein, welcher vermittels eines Antriebsorgans 60, beispielsweise Antriebsritzel, in nachfolgend beschriebener Art und Weise die Unwuchtmassen 30₁, 30₂ zur Drehung um deren jeweilige Unwuchtdrehachsen U antreibt.

Mit dem Antriebsorgan 60 ist eine erste Hohlwelle 62 in Kämmeingriff, so dass die erste Hohlwelle 62 durch das Antriebsorgan 60 zur Drehung um die Walzendrehachse W antreibbar ist. Mit der ersten Hohlwelle 62 kämmt eine Antriebswelle 64, die an ihrem von der Hohlwelle 62 entfernten axialen Endbereich ein erstes Antriebszahnrad 66 trägt und an dem Gehäuseteil 48 des rotierenden Trägeranordnungsteils 46 drehbar gelagert ist. Das erste Antriebszahnrad 66 steht in Kämmeingriff mit einem der Unwuchtmasse 30₁ zugeordneten bzw. mit dieser zur gemeinsamen Drehung um deren Unwuchtdrehachse U verbundenen Abtriebszahnrad 68₁. Das mit dem Unwuchtmotor 58 über die erste Hohlwelle 62 und die Antriebswelle 64 direkt zur Drehung um eine der Walzendrehachse W entsprechende Antriebszahnraddrehachse A gekoppelte erste Antriebszahnrad 66 treibt die Unwuchtmasse 30₁ zur Drehung an.

Die erste Hohlwelle 62 bildet an ihrem vom Unwuchtmotor 58 entfernten und mit der Antriebswelle 64 zur gemeinsamen Drehung gekoppelten axialen Ende ein erstes Sonnenrad 70 einer als Planetengetriebe ausgebildeten und allgemein mit 72 bezeichneten Unwuchtgetriebeeinheit. An einer die Antriebswelle 64 umgebenden zweiten Hohlwelle 74 ist an deren dem ersten Sonnenrad 70 benachbarten axialen Ende ein zweites Sonnenrad 76 der Unwuchtgetriebeeinheit 72 ausgebildet.

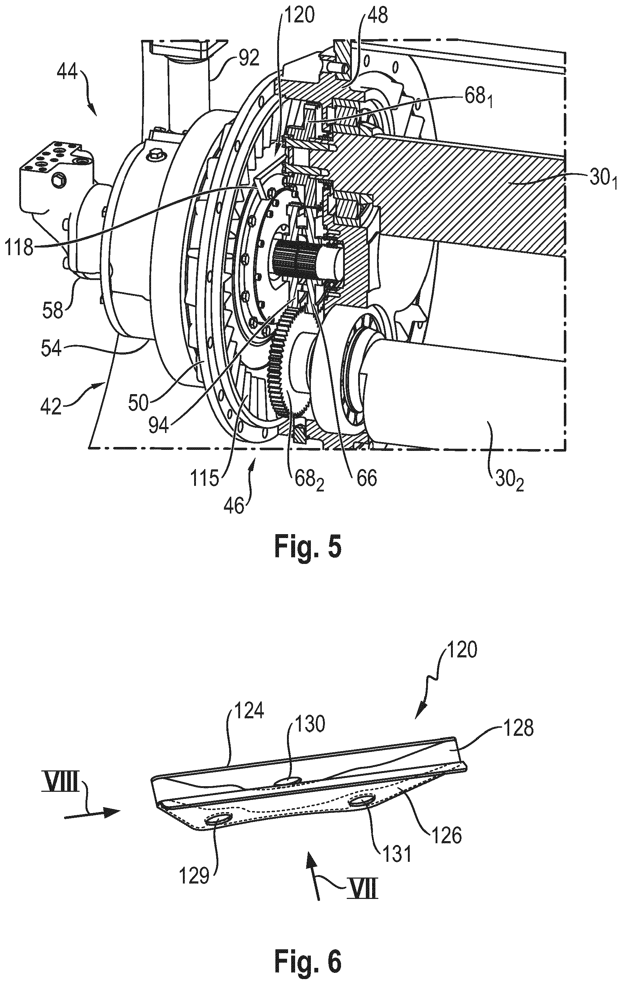

An einem die Walzendrehachse W ringartig umgebenden Planetenradträger 78 sind axial zueinander benachbarte und den beiden Sonnenrädern 70, 76 jeweils zugeordnete Sätze von Planetenrädern 80, 82 drehbar getragen. Dem Satz von mit dem ersten Sonnenrad 70 in Kämmeingriff stehenden Planetenrädern 70 ist ein diese umgebendes und ein erstes Hohlrad 84 bereitstellendes erstes Hohlradelement 86 zugeordnet. Den mit dem zweiten Sonnenrad 76 in Kämmeingriff stehenden Planetenrädern 82 ist ein mit diesen in Kämmeingriff stehendes zweites Hohlrad 88 an einem zweiten Hohlradelement 90 zugeordnet. Während das zweite Hohlradelement 90 am Gehäuseteil 54 des feststehenden Trägeranordnungsteils 44 fest, insbesondere drehfest, getragen ist, ist das erste Hohlradelement 86 in dem zweiten Hohlradelement 90 durch einen in Fig. 5 angedeuteten Stellantrieb 92 um die Walzendrehachse W bezüglich des zweiten Hohlradelements 90 drehbar getragen. Der Stellantrieb 92 kann beispielsweise einen mit dem ersten Hohlradelement 86 zusammenwirkenden Schneckenradantrieb umfassen.

Mit der zweiten Hohlwelle 74 ist an deren vom zweiten Sonnenrad 76 entfernten axialen Ende ein zweites Antriebszahnrad 94 drehfest verbunden. Das zweite Antriebszahnrad 94 liegt axial unmittelbar neben dem ersten Antriebszahnrad 66 und steht in Kämmeingriff mit einem der Unwuchtmasse 30₂ zugeordneten Antriebszahnrad 68₂.

Wird die auch die Antriebswelle 64 direkt antreibende erste Hohlwelle 62 durch den Unwuchtmotor 58 zur Drehung um eine der Walzendrehachse W entsprechenden Antriebszahnraddrehachse A angetrieben, so wird aufgrund des Umstandes, dass im dargestellten Ausgestaltungsbeispiel der Unwuchtgetriebeeinheit 72 die beiden Sonnenräder 70, 76, die beiden Hohlräder 84, 88 und auch die Planetenräder 80, 82 zueinander jeweils den gleichen Durchmesser aufweisen, die Drehung des Antriebsorgans 60 ohne Drehzahländerung auf das zweite Antriebszahnrad 94 übertragen, welches die Unwuchtmasse 30₂ zur Drehung mit der gleichen Drehzahl und Drehrichtung antreibt, mit welcher auch die Unwuchtmasse 30₁ rotieret.

Soll die Phasenlage der mit gleicher Drehzahl rotierenden Unwuchtmassen 30₁, 30₂ bezüglich einander verändert werden, wird das erste Hohlradelement 86 um die Walzendrehachse W verdreht, was im Verlaufe dieser Drehbewegung zu einer Änderung der Drehzahl der zweiten Hohlwelle 74 bezüglich der Drehzahl der ersten Hohlwelle 62 und dementsprechend auch einer vorübergehenden Änderung der Drehzahl der über das zweite Antriebszahnrad 94 angetriebenen Unwuchtmasse 30₂ führt. Dies führt zu einer Änderung der Phasenlage des Massenschwerpunkts M der Unwuchtmasse 30₂ bezüglich der Phasenlage der Massenschwerpunkts M der Unwuchtmasse 30₁. Ist das gewünschte Ausmaß der Änderung der Phasenlage erreicht, wird die Drehbewegung des ersten Hohlradelements 84 beendet, so dass danach wieder beide Unwuchtmassen 30₁, 30₂ mit gleicher Drehzahl rotieren.

Durch die Verstellung der Phasenlage der Massenschwerpunkte M der beiden Unwuchtmassen 30₁, 30₂ wird es möglich, die Unwuchtanordnung 28 zwischen verschiedenen Betriebszuständen umzuschalten. Sind die beiden Unwuchtmassen 30₁, 30₂ so angeordnet, dass, wie in Fig. 2 erkennbar, deren Massenschwerpunkte M die gleiche Phasenlage aufweisen und somit die bei den Unwuchtmassen 30₁, 30₂ auftretenden und zur jeweiligen Unwuchtdrehachse U orthogonal stehenden Kraftvektoren zueinander parallel und gleich orientiert sind, addieren sich diese Kräfte konstruktiv, so dass in jeder Drehposition der Unwuchtmassen 30₁, 30₂ eine zur Walzendrehachse W orthogonale Kraft auf die Bodenbearbeitungswalze 22 einwirkt und die Unwuchtanordnung 28 somit in einem Vibrationsbetrieb arbeitet. Wird die Phasenlage der Massenschwerpunkte M durch Relativdrehung der Unwuchtmassen 30₁, 30₂ aus der in Fig. 2 dargestellten Positionierung ohne Phasenversatz um 180° verändert, so dass ein Phasenversatz der Massenschwerpunkte M der Unwuchtmassen 30₁, 30₂ von 180° entsteht, überlagern die an den Unwuchtmassen 30₁, 30₂ im Rotationsbetrieb derselben auftretenden Kräfte sich derart, dass ein periodisch seine Richtung wechselndes Drehmoment auf die Bodenbearbeitungswalze 22 um die Walzendrehachse W ausgeübt wird. In diesem Zustand wird die Unwuchtanordnung 28 in einem Oszillationsbetrieb betrieben. Durch das Verändern der Phasenlage der Massenschwerpunkte M der Unwuchtmassen 30₁, 30₂ zwischen den beiden vorangehend angesprochenen Relativpositionierungen durch eine Einwirkung auf die Unwuchtgetriebeeinheit 72 kann somit die Unwuchtanordnung 28 somit zwischen einem Vibrationsbetrieb und einem Oszillationsbetrieb umgeschaltet werden.

Es ist darauf hinzuweisen, dass die Unwuchtanordnung 28 auch mit einer anderen Anzahl an Unwuchtmassen aufgebaut sein kann. Beispielsweise können vier Unwuchtmassen mit einem Winkelabstand von 90° bezüglich einander um die Walzendrehachse W vorgesehen sein, wobei einander bezüglich der Walzendrehachse W diametral gegenüberliegende Unwuchtmassen jeweils ein Unwuchtmassenpaar bilden, bei welchem die beiden Unwuchtmassen durch jeweils eines der beiden Antriebszahnräder zur gemeinsamen Drehung, also zur Drehung mit gleicher Drehzahl und gleicher Drehrichtung, angetrieben werden. Durch Einwirkung auf die Unwuchtgetriebeeinheit 72 kann die Phasenlage der Massenschwerpunkte der beiden Unwuchtmassenpaare bezüglich einander verändert werden, wodurch es möglich wird, im Rotationsbetrieb der Unwuchtmassen die Größe und die Orientierung einer zur Walzendrehachse W im Wesentlichen orthogonal orientierten Kraft im Vibrationsbetrieb der Unwuchtanordnung 28 zu variieren.

Zur Erlangung dieser Drehbewegung der Unwuchtmassen 30₁, 30₂ bilden die Unwuchtgetriebeeinheit 72, die Antriebszahnräder 66, 94 sowie die durch diese zur Drehung angetriebenen Abtriebszahnräder 68₁, 68₂ ein allgemein mit 96 bezeichnetes Unwuchtgetriebesystem des Unwuchtantriebs 59. Um die verschiedenen rotierenden und miteinander in Kämmeingriff stehenden Komponenten dieses Unwuchtgetriebesystems 96 und auch die diese Komponenten lagernden Lagereinheiten vor übermäßigem Verschleiß zu schützen, ist in einem in der Trägeranordnung 42 gebildeten Trägeranordnungsinnenraum 98 flüssiges Schmiermittel, beispielsweise Öl oder dergleichen, enthalten. Um diesen Trägeranordnungsinnenraum 98 gegen den Austritt von Schmiermittel abzudichten, sind einerseits den Unwuchtmassen 30₁, 30₂ diese bezüglich des Gehäuseteils 48 des rotierenden Trägeranordnungsteils 46 gegen den Austritt von Fluid abdichtende Dichteinheiten 100 zugeordnet. Der rotierende Trägeranordnungsteil 46 ist durch eine Dichteinheit 101 bezüglich des feststehenden Trägeranordnungsteils 44 dicht abgeschlossen.

Der Trägeranordnungsinnenraum 98 umfasst einen ersten Bereich 102, welcher insbesondere hinsichtlich seiner axialen Ausdehnung im Wesentlichen in dem drehbaren Trägeranordnungsteil 46 ausgebildet ist und zwischen den Gehäuseteilen 48, 50 desselben begrenzt ist. Im ersten Bereich 102 des Trägeranordnungsinnenraums 98 sind auch die beiden Antriebszahnräder 66, 94 sowie die Abtriebszahnräder 68₁, 68₂ enthalten.

Der Trägeranordnungsinnenraum 98 umfasst ferner einen zweiten Bereich 104, welcher insbesondere hinsichtlich seiner axialen Ausdehnung im Wesentlichen in dem feststehenden Trägeranordnungsteil 44 ausgebildet ist und von dem Gehäuseteil 54 desselben nach radial außen und durch den den Unwuchtmotor 58 tragenden Abschlussdeckel 56 axial begrenzt ist. An dem an dem Gehäuseteil 54 fest getragenen zweiten Hohlradelement 90 ist an dem dem ersten Bereich 102 des Trägeranordnungsinnenraums 98 zugewandten axialen Ende desselben ein scheibenartiges Begrenzungselement 106 mit einer beispielsweise zur Walzendrehachse W konzentrischen Schmiermitteldurchtrittsöffnung 108 getragen.

In der Trägeranordnung 42 sind im Wesentlichen im ersten Bereich 102 des Trägeranordnungsinnenraums 98 ein erster Schmiermittelsumpf 110 und im Wesentlichen im zweiten Bereich 104 des Trägeranordnungsinnenraums 98 ein zweiter Schmiermittelsumpf 112 ausgebildet. Bei nicht rotierender Bodenbearbeitungswalze 22 und nicht zur Rotation angetriebenen Unwuchtmassen 30₁, 30₂ ist im ersten Schmiermittelsumpf 110 Schmiermittel bis zu einem ersten Schmiermittelsumpfniveau N₁ enthalten. Das schwerkraftbedingt grundsätzlich in der Höhenrichtung H unter der Walzendrehachse W liegende erste Schmiermittelsumpfniveau N₁ weist einen ersten Abstand D₁ in der Höhenrichtung H zur Walzendrehachse W auf.

Der zweite Schmiermittelsumpf 112 weist ein zweites Schmiermittelsumpfniveau N₂ auf, welches im Wesentlichen definiert ist durch die im Wesentlichen auch eine Überlaufverbindung 114 bereitstellende Schmiermitteldurchtrittsöffnung 108 bzw. deren in der Höhenrichtung H nach unten den größten Abstand zur Walzendrehachse W aufweisenden Bereich. Dieser Abstand D₂ des zweiten Schmiermittelsumpfniveaus N₂ ist, wie die Fig. 4 dies deutlich zeigt, kleiner als der Abstand D₁ des ersten Schmiermittelsumpfniveaus zur Walzendrehachse W. Da außer der im Wesentlichen die Überlaufverbindung 114 bereitstellenden Schmiermitteldurchtrittsöffnung 108 keine Strömungsverbindung zwischen dem zweiten Schmiermittelsumpf 112 und dem ersten Schmiermittelsumpf 110 besteht, ist der zweite Schmiermittelsumpf 112 im Wesentlichen immer bis zum zweiten Schmiermittelsumpfniveau N₂ bzw. zu dem in der Höhenrichtung H untersten Bereich der Schmiermitteldurchtrittsöffnung 108 mit Schmiermittel gefüllt.

Im Rotationsbetrieb der Bodenbearbeitungswalze 22 und insbesondere auch bei zur Drehung angetriebenen Unwuchtmassen 30₁, 30₂ bewegen sich sukzessive die mit Radialabstand zur Walzendrehachse W angeordneten Unwuchtmassen 30₁, 30₂und die mit diesen zur gemeinsamen Drehung verbunden Abtriebszahnräder 68₁, 68₂ in den Bereich des ersten Schmiermittelsumpfes 110 bzw. durch diesen hindurch. Dabei werden nicht nur die durch den ersten Schmiermittelsumpf 110 sich hindurch bewegenden Bereiche der Abtriebszahnräder 68₁, 68₂ bzw. der durch diese angetriebenen Unwuchtmassen 30₁, 30₂ in den ersten Schmiermittelsumpf 110 bzw. durch diesen hindurch bewegt und dabei mit Schmiermittel benetzt, sondern es wird durch die Rotation insbesondere der Abtriebszahnräder 68₁, 68₂ Schmiermittel aus dem ersten Schmiermittelsumpf 110 im Wesentlichen in das gesamte Volumen des ersten Bereichs 102 des Trägeranordnungsinnenraums 98 und dabei insbesondere in der Höhenrichtung H auch nach oben geschleudert. Auch die mit den Abtriebszahnrädern 68₁, 68₂ in Kämmeingriff stehenden Antriebszahnräder 66, 94 tragen aufgrund des Kontakts mit den Abtriebszahnrädern 68₁, 68₂ dazu bei, dass Schmiermittel in den ersten Bereich 102 des Trägeranordnungsinnenraums 98 und insbesondere auch in der Höhenrichtung H nach oben geschleudert wird. Die durch den ersten Schmiermittelsumpf 110 sich hindurch bewegenden Abtriebszahnräder 68₁, 68₂ und ggf. auch die Antriebszahnräder 66, 94 bilden somit im Wesentlichen eine Schmiermittelförderanordnung 116, durch welche Schmiermittel aus dem ersten Schmiermittelsumpf 110 im ersten Bereich 102 des Trägeranordnungsinnenraums 98 verteilt und in der Höhenrichtung H nach oben gefördert wird, wie dies durch Pfeile in Fig. 4 angedeutet ist.

Zum Verteilen von Schmiermittel im Wesentlichen im gesamten Volumen des ersten Bereichs 102 des Trägeranordnungsinnenraums 98 können ferner an der dem ersten Bereich des Trägeranordnungsinnenraums 98 zugewandten Seite des Bauteils 50 des rotierenden Trägeranordnungsteils 46 als Förderschaufeln wirkende, in Umfangsrichtung aufeinander folgende und näherungsweise radial sich erstreckende, in Fig. 5 erkennbare Fördervorsprünge 115 vorgesehen sein. Die Fördervorsprünge 115 bewegen sich bei Rotation der Bodenbearbeitungswalze 22 durch den ersten Schmiermittelsumpf 110 hindurch und nehmen dabei Schmiermittel nach oben mit, welches dann von oben auf über dem ersten Schmiermittelsumpf 110 liegende Komponenten herabtropft. Diese auch zur verstärkten Wärmeabfuhr beitragenden Fördervorsprünge 115 bilden somit einen Teil der Schmiermittelförderanordnung 116.

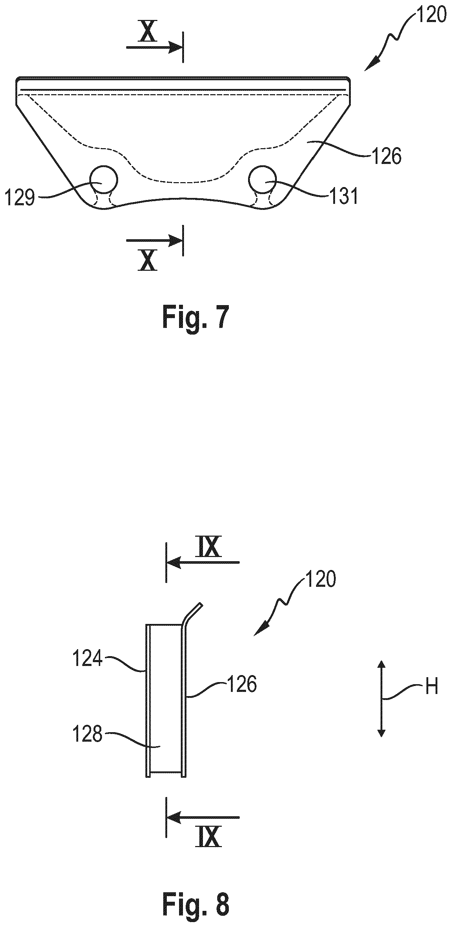

An dem feststehenden Trägeranordnungsteil 44, insbesondere dem Gehäuseteil 54 desselben ist in einem in der Höhenrichtung H über der Walzendrehachse W liegenden Bereich eine allgemein mit 118 bezeichnete Schmiermittelauffangeinheit angeordnet. Diese umfasst ein nachfolgend mit Bezug auf die Fig. 6 bis 10 detaillierter beschriebenes, am Gehäuseteil 50 beispielsweise durch Verschraubung festgelegtes Schmiermittelauffangelement 120, welches im Wesentlichen in der Höhenrichtung H nach oben offen ist und im oberen Teil des ersten Bereichs 102 des Trägeranordnungsinnenraums 98 sich ansammelndes bzw. dort herabtropfendes Schmiermittel auffangen kann. Über eine insbesondere im Gehäuseteil 54 des feststehenden Trägeranordnungsteils 44 und beispielsweise auch im zweiten Hohlradelement 90 ausgebildete, kanalartige Schmiermittelströmungsverbindung 122 gelangt das durch das Schmiermittelauffangelement 120 aufgefangene Schmiermittel in den zweiten Bereich 104 des Trägeranordnungsinnenraums 98 und somit in den darin im Wesentlichen ausgebildeten zweiten Schmiermittelsumpf 112.

Wenn im Stillstandzustand der erste Schmiermittelsumpf 110 bis zum ersten Schmiermittelsumpf N₁ mit Schmiermittel gefüllt ist, wird im Rotationsbetrieb aufgrund des Umstandes, dass auch in den oberen Teil des ersten Bereichs 102 des Trägeranordnungsinnenraums 98 Schmiermittel geschleudert wird und dieses teilweise über die Schmiermittelströmungsverbindung 122 in den zweiten Bereich 104 des Trägeranordnungsinnenraums 98 strömt, das Niveau des ersten Schmiermittelsumpfs 110 unter das im Stillstandzustand vorhandene erste Schmiermittelsumpfniveau N₁ absinken, jedoch nicht so weit, dass eine ausreichende Benetzung von durch den ersten Schmiermittelsumpf 110 sich hindurch bewegenden Komponenten der Schmiermittelförderanordnung 116 nicht mehr möglich wäre. Der Füllstand des zweiten Schmiermittelsumpfes 112 entspricht jedoch immer im Wesentlichen dem zweiten Schmiermittelsumpfniveau N₂.

Im Arbeitsbetrieb, also bei Rotation der Bodenbearbeitungswalze 22 und insbesondere auch der Unwuchtmassen 30₁, 30₂ bewegen Komponenten der im Wesentlichen im zweiten Bereich 104 des Trägeranordnungsinnenraums 104 aufgenommenen Unwuchtgetriebeeinheit 72 sich durch den zweiten Schmiermittelsumpf 112 hindurch. Dies betrifft insbesondere die beiden Hohlräder 84, 88, den Planetenradträger 78 sowie die daran drehbar getragenen Planetenräder 80, 82. Dadurch kommen sukzessive alle Bereiche der Unwuchtgetriebeeinheit 72 in Kontakt mit dem im zweiten Schmiermittelsumpf 112 vorhandenen Schmiermittel. Auch die Sonnenräder 70, 76 werden durch den Kontakt mit den Planetenrädern 80, 82 mit Schmiermittel benetzt.

Durch das kontinuierliche Fördern von Schmiermittel vermittels der Schmiermittelförderanordnung 116 aus dem ersten Schmiermittelsumpf 110 in den zweiten Schmiermittelsumpf 112 ist dafür gesorgt, dass der in den zweiten Bereich 104 des Trägeranordnungsinnenraums 98 geförderte Anteil des Schmiermittels, welcher dazu führen würde, dass das zweite Schmiermittelniveau N₂ überschritten wird, zu einem permanenten Abfluss von Schmiermittel aus dem zweiten Schmiermittelsumpf 112 bzw. dem zweiten Bereich 104 des Trägeranordnungsinnenraums 98 über die Überlaufverbindung 114 bzw. die Schmiermitteldurchtrittsöffnung 108 in den ersten Schmiermittelsumpf 110 führt. Es wird somit eine Schmiermittelzirkulation aufgebaut, bei welcher durch die Förder- bzw. Schleuderwirkung der Antriebszahnräder 66, 94, der Abtriebszahnräder 68₁, 68₂, 68₃ und der Fördervorsprünge 115 dafür gesorgt ist, dass alle im ersten Bereich 102 des Trägeranordnungsinnenraums 98 vorhandenen Komponenten insbesondere des Unwuchtgetriebesystems 96 mit Schmiermittel benetzt werden. Dies betrifft insbesondere auch die in diesem Bereich vorhandenen und der Lagerung rotierender Systemkomponenten dienenden Lagereinheiten. Ein Teil dieses im ersten Bereich 102 des Trägeranordnungsinnenraums 98 verteilten Schmiermittels gelangt über das Schmiermittelauffangelement 120 und die Schmiermittelströmungsverbindung 122 in den zweiten Bereich 104 des Trägeranordnungsinnenraums 98 und den dort vorgesehenen zweiten Schmiermittelsumpf 112 und dient somit dazu, insbesondere die Unwuchtgetriebeeinheit 72 ausreichend zu schmieren. Aufgrund der kaskadenartigen Anordnung der beiden Schmiermittelsümpfe 110, 112 ist somit dafür gesorgt, dass auf in der Höhenrichtung H auf deutlich unterschiedlichen Niveaus positionierte bzw. in diesen Bereichen sich bewegende Komponenten Schmiermittel zuverlässig verteilt werden kann.

Das in den Fig. 6 bis 10 dargestellte, im Wesentlichen wannenartig ausgebildete Schmiermittelauffangelement 120 weist im dargestellten Ausgestaltungsbeispiel zwei Stirnwände 124, 126 und ein dazwischen angeordnetes Bodenwandelement 128 auf. Das Bodenwandelement 128 schließt das grundsätzlich in der Höhenrichtung H nach oben offene Schmiermittelauffangelement 120 in der Höhenrichtung H nach unten bzw. auch in seitlicher Richtung ab. Die Stirnwände 124, 126 und das Bodenwandelement 128 können beispielsweise durch Öffnungen 129, 131 in diesen durchsetzende und das Schmiermittelauffangelement 120 am Gehäuseteil 50 festlegende Schraubbolzen zusammengehalten werden.

In der an den feststehenden Trägereinordnungsteil 44 angrenzend zu positionierenden Stirnwand 124 ist eine Durchtrittsöffnung 130 ausgebildet, durch welche hindurch in dem Schmiermittelauffangelement 120 aufgefangenes Schmiermittel in die Schmiermittelströmungsverbindung 122 strömen kann. Es ist darauf hinzuweisen, dass bei entsprechender baulicher Ausgestaltung die Stirnwand 124 auch unmittelbar durch den feststehenden Trägeranordnungsteil 44 bereitgestellt sein kann, oder/und dass das Schmiermittelauffangelement 120 auch einstückig, beispielsweise als Gusselement, aufgebaut sein kann.

Um eine verbesserte Auffangwirkung für das Schmiermittelauffangelement 120 bei vergleichsweise kompakter Bauart erreichen zu können, kann die von dem feststehenden Trägeranordnungsteil 44 weiter entfernt liegende Stirnwand 126 in ihrem über das Bodenwandelement 128 in der Höhenrichtung H sich nach oben hinaus erstreckenden Bereich in Richtung von dem feststehenden Trägeranordnungsteil 44 weg abgekrümmt sein, um die trichterartige Ausgestaltung des Schmiermittelauffangelements 120 weiter zu unterstützen.

Abschließend ist darauf hinzuweisen, dass in der Trägeranordnung 42, wie dies insbesondere in Fig. 4 zu erkennen ist, in verschiedenen Bereichen durch Abschlusselemente 132 abgeschlossene Öffnungen ausgebildet sein können, über welche Schmiermittel in den Trägeranordnungsinnenraum 98 eingefüllt bzw. aus diesem abgelassen werden kann.

## Patentansprüche

1. Bodenbearbeitungswalze, insbesondere für einen Bodenverdichter, umfassend:
- einen um eine Walzendrehachse (W) drehbaren, einen Walzeninnenraum (26) umgebenden Walzenmantel (24),
- eine Unwuchtanordnung (28) mit einer Mehrzahl von mit Umfangsabstand um die Walzendrehachse (W) zueinander angeordneten Unwuchtmassen (30₁, 30₂), wobei jede Unwuchtmasse (30₁, 30₂) zur Drehung um eine dieser zugeordnete Unwuchtdrehachse (U) antreibbar ist,
- einen Unwuchtantrieb (59) mit einem Unwuchtmotor (58) und einem Unwuchtgetriebesystem (96), wobei das Unwuchtgetriebesystem (96) wenigstens ein durch den Unwuchtmotor (58) zur Drehung antreibbares Antriebszahnrad (66, 94) und in Zuordnung zu jeder Unwuchtmasse (30₁, 30₂) ein mit dieser zur gemeinsamen Drehung verbundenes Abtriebszahnrad (68₁, 68₂) umfasst, wobei jedes Antriebszahnrad (66, 94) mit wenigstens einem Abtriebszahnrad (68₁, 68₂) zur Drehmomentübertragung gekoppelt ist,
- einen in einer Höhenrichtung (H) unter der Walzendrehachse (W) angeordneten ersten Schmiermittelsumpf (110), wobei der erste Schmiermittelsumpf (110) bis zu einem in der Höhenrichtung (H) einen ersten Abstand (D₁) zur Walzendrehachse (W) aufweisenden ersten Schmiermittelsumpfniveau (N₁) mit Schmiermittel gefüllt oder füllbar ist,
- einen in der Höhenrichtung (H) unter der Walzendrehachse (W) angeordneten zweiten Schmiermittelsumpf (112), wobei der zweite Schmiermittelsumpf (112) bis zu einem in der Höhenrichtung (H) einen zweiten Abstand (D₂) zur Walzendrehachse (W) aufweisenden zweiten Schmiermittelsumpfniveau (N₂) mit Schmiermittel gefüllt oder füllbar ist, wobei der zweite Abstand (D₂) kleiner ist als der erste Abstand (D₁),
**gekennzeichnet durch**:
- eine Schmiermittelförderanordnung (116) zum Fördern von Schmiermittel aus dem ersten Schmiermittelsumpf (110) in den zweiten Schmiermittelsumpf (112),
- eine Überlaufverbindung (114) zwischen dem ersten Schmiermittelsumpf (110) und dem zweiten Schmiermittelsumpf (112), wobei im Förderbetrieb der Schmiermittelförderanordnung (116) bei Erreichen oder/und Überschreiten des zweiten Schmiermittelsumpfniveaus (N₂) im zweiten Schmiermittelsumpf (112) Schmiermittel von dem zweiten Schmiermittelsumpf (112) über die Überlaufverbindung (114) in den ersten Schmiermittelsumpf (110) strömt.

2. Bodenbearbeitungswalze nach Anspruch 1,
**dadurch gekennzeichnet, dass** wenigstens ein Antriebszahnrad (66, 94), vorzugsweise jedes Antriebszahnrad (66, 94), mit wenigstens einem Abtriebszahnrad (68₁, 68₂) in Kämmeingriff steht, oder/und dass wenigstens ein Abtriebszahnrad (68₁, 68₂), vorzugsweise jedes Abtriebszahnrad (68₁, 68₂), mit der diesem zugeordneten Unwuchtmasse (30₁, 30₂) zur gemeinsamen Drehung um die Unwuchtdrehachse (U) dieser Unwuchtmasse (30₁, 30₂) verbunden ist, oder/und dass die Unwuchtdrehachse (U) wenigstens einer Unwuchtmasse (30₁, 30₂), vorzugsweise jeder Unwuchtmasse (30₁, 30₂), zur Walzendrehachse (W) exzentrisch oder/und parallel ist.

3. Bodenbearbeitungswalze nach Anspruch 1 oder 2,
**dadurch gekennzeichnet, dass** in der Höhenrichtung (H) über der Walzendrehachse (W) eine in der Höhenrichtung (H) nach oben offene Schmiermittelauffangeinheit (118) vorgesehen ist, und dass eine Schmiermittelströmungsverbindung (122) zwischen der Schmiermittelauffangeinheit (118) und dem zweiten Schmiermittelsumpf (112) zum Leiten von in der Schmiermittelauffangeinheit (118) aufgefangenem Schmiermittel in den zweiten Schmiermittelsumpf (112) vorgesehen ist, vorzugsweise wobei die Schmiermittelauffangeinheit (118) ein wannenartiges, vorzugsweise in der Höhenrichtung nach oben sich trichterartig erweiterndes Schmiermittelauffangelement (120) umfasst.

4. Bodenbearbeitungswalze nach einem der Ansprüche 1-3,
**dadurch gekennzeichnet, dass** der Walzenmantel (24) an einer Trägeranordnung (42) um die Walzendrehachse (W) drehbar getragen ist, wobei die Trägeranordnung (42) einen mit dem Walzenmantel (24) drehfest verbundenen drehbaren Trägeranordnungsteil (46) und einen den drehbaren Trägeranordnungsteil (46) drehbar tragenden feststehenden Trägeranordnungsteil (44) umfasst, wobei der erste Schmiermittelsumpf (110) und der zweite Schmiermittelsumpf (112) in einem in der Trägeranordnung (42) ausgebildeten Trägeranordnungsinnenraum (98) vorgesehen sind, vorzugsweise wobei der erste Schmiermittelsumpf (110) im Wesentlichen vollständig in dem drehbaren Trägeranordnungsteil (46) vorgesehen ist oder/und der zweite Schmiermittelsumpf (112) im Wesentlichen vollständig in dem feststehenden Trägeranordnungsteil (44) vorgesehen ist.

5. Bodenbearbeitungswalze nach Anspruch 4,
**dadurch gekennzeichnet,**
**dass** die Unwuchtmassen (30₁, 30₂) an dem drehbaren Trägeranordnungsteil (46) um deren Unwuchtdrehachsen (U) drehbar getragen sind,
oder/und
**dass** das wenigstens eine Antriebszahnrad (66, 94) und die Abtriebszahnräder (68₁, 68₂) in einem im Wesentlichen in dem drehbaren Trägeranordnungsteil (46) ausgebildeten ersten Bereich (102) des Trägeranordnungsinnenraums (98) angeordnet sind.

6. Bodenbearbeitungswalze nach Anspruch 5,
**dadurch gekennzeichnet, dass** ein in der Höhenrichtung (H) unter der Walzendrehachse (W) positioniertes Abtriebszahnrad (68₁, 68₂) wenigstens teilweise in dem ersten Schmiermittelsumpf (110) positioniert ist.

7. Bodenbearbeitungswalze nach einem der Ansprüche 4-6, sofern auf Anspruch 3 rückbezogen,
**dadurch gekennzeichnet, dass** die Schmiermittelauffangeinheit (118) an dem feststehenden Trägeranordnungsteil (44) vorgesehen ist, und dass die Schmiermittelströmungsverbindung (122) in dem feststehenden Trägeranordnungsteil (44) oder/und in einem im Wesentlichen in dem feststehenden Trägeranordnungsteil (44) ausgebildeten zweiten Bereich (104) des Trägeranordnungsinnenraums (98) ausgebildet ist.

8. Bodenbearbeitungswalze nach Anspruch 7,
**dadurch gekennzeichnet, dass** an dem feststehenden Trägeranordnungsteil (44) ein den zweiten Schmiermittelsumpf (112) in Richtung der Walzendrehachse (W) begrenzendes Begrenzungselement (106) vorgesehen ist, und dass in dem Begrenzungselement (106) wenigstens eine Schmiermitteldurchtrittsöffnung (108) der Überlaufverbindung (114) vorgesehen ist,
vorzugsweise wobei die Walzendrehachse (W) die Schmiermitteldurchtrittsöffnung (108) durchsetzt oder/und die Schmiermitteldurchtrittsöffnung (108) zur Walzendrehachse (W) im Wesentlichen konzentrisch angeordnet ist.

9. Bodenbearbeitungswalze nach einem der Ansprüche 1-8,
**dadurch gekennzeichnet, dass** das Unwuchtgetriebesystem (96) zwei Antriebszahnräder (66, 94) und eine Unwuchtgetriebeeinheit (72) umfasst, und dass wenigstens eines der Antriebszahnräder (66, 94) durch den Unwuchtmotor (54) über die Unwuchtgetriebeeinheit (72) zur Drehung antreibbar ist.

10. Bodenbearbeitungswalze nach Anspruch 9,
**dadurch gekennzeichnet, dass** eines der Antriebszahnräder (66, 94) durch den Unwuchtmotor (54) über die Unwuchtgetriebeeinheit (72) zur Drehung um eine zur Walzendrehachse (W) vorzugsweise konzentrische Antriebszahnraddrehachse (A) antreibbar ist, und dass ein anderes der Antriebszahnräder (66, 94) durch den Unwuchtmotor (54) direkt zur Drehung um die Antriebszahnraddrehachse (A) antreibbar ist,
vorzugsweise wobei die Unwuchtgetriebeeinheit (72) als Drehlage-Verstellgetriebe ausgebildet ist, wobei durch die Unwuchtgetriebeeinheit (72) eine Drehlage des einen der Antriebszahnräder (66, 94) um die Antriebszahnraddrehachse (A) bezüglich einer Drehlage des anderen der Antriebszahnräder (66, 94) um die Antriebszahnraddrehachse (A) verstellbar ist, vorzugsweise wobei die Unwuchtgetriebeeinheit (72) ein Planetengetriebe umfasst.

11. Bodenbearbeitungswalze nach einem der Ansprüche 9 oder 10, sofern auf Anspruch 4 rückbezogen,
**dadurch gekennzeichnet, dass** die Unwuchtgetriebeeinheit (72) in einem im Wesentlichen in dem feststehenden Trägeranordnungsteil (44) ausgebildeten zweiten Bereich (104) des Trägeranordnungsinnenraums (98) angeordnet ist.

12. Bodenbearbeitungswalze nach Anspruch 11, sofern auf Anspruch 4 rückbezogen,
**dadurch gekennzeichnet, dass** ein in der Höhenrichtung (H) unter der Walzendrehachse (W) positionierter Teil der Unwuchtgetriebeeinheit (72) wenigstens teilweise in dem zweiten Schmiermittelsumpf (112) positioniert ist.

13. Bodenbearbeitungswalze nach einem der Ansprüche 1-12,
**dadurch gekennzeichnet, dass** die Schmiermittelförderanordnung (116) wenigstens ein Abtriebszahnrad (68₁, 68₂), vorzugsweise alle Abtriebszahnräder (68₁, 68₂), oder/und wenigstens ein Antriebszahnrad (66, 94), vorzugsweise alle Antriebszahnräder (66, 94), umfasst.

14. Bodenbearbeitungswalze nach Anspruch 4 oder einem der Ansprüche 5-13, sofern auf Anspruch 4 rückbezogen,
**dadurch gekennzeichnet, dass** die Schmiermittelförderanordnung (116) eine Mehrzahl von an dem drehbaren Trägeranordnungsteil (46) vorgesehenen Fördervorsprüngen (115) umfasst.

15. Bodenbearbeitungsmaschine, insbesondere Bodenverdichter, umfassend wenigstens eine Bodenbearbeitungswalze (22) nach einem der Ansprüche 1-14.

## Claims

1. A ground processing roller, in particular for a soil compactor, comprising:
- a roller shell (24) that can be rotated about a roller axis of rotation (W) and surrounds a roller interior (26),
- an unbalance arrangement (28) with a plurality of unbalanced masses (30₁, 30₂) arranged at a circumferential distance from one another about the roller axis of rotation (W), wherein each unbalanced mass (30₁, 30₂) can be driven to rotate about an unbalance axis of rotation (U) assigned to it,
- an unbalance drive (59) with an unbalance motor (58) and an unbalance transmission system (96), wherein the unbalance transmission system (96) comprises at least one drive gear (66, 94) that can be driven for rotation by the unbalance motor (58) and, in assignment to each unbalanced mass (30₁, 30₂), a driven gear (68₁, 68₂) connected thereto for common rotation, wherein each drive gear (66, 94) is coupled to at least one driven gear (68₁, 68₂) for torque transmission,
- a first lubricant sump (110) arranged in a height direction (H) below the roller axis of rotation (W), wherein the first lubricant sump (110) is filled or fillable with lubricant up to a first lubricant sump level (N₁) which has a first distance (D₁) from the roller axis of rotation (W) in the height direction (H),
- a second lubricant sump (112) arranged in a height direction (H) below the roller axis of rotation (W), wherein the second lubricant sump (112) is filled or fillable with lubricant up to a second lubricant sump level (N₂) which has a second distance (D₂) from the roller axis of rotation (W) in the height direction (H), wherein the second distance (D₂) is smaller than the first distance (D₁),
**characterized by:**
- a lubricant conveying arrangement (116) for conveying lubricant from the first lubricant sump (110) into the second lubricant sump (112),
- an overflow connection (114) between the first lubricant sump (110) and the second lubricant sump (112), wherein lubricant flows from the second lubricant sump (112) via the overflow connection (114) into the first lubricant sump (110) in the conveying operation of the lubricant conveying arrangement (116) when the second lubricant sump level (N₂) in the second lubricant sump (112) is reached or/and exceeded.

2. The ground processing roller as claimed in claim 1,
**characterized in that** at least one drive gear (66, 94), preferably each drive gear (66, 94), is in meshing engagement with at least one driven gear (68₁, 68₂), or/and **in that** at least one driven gear (68₁, 68₂), preferably each driven gear (68₁, 68₂), is connected to the unbalance mass (30₁, 30₂) assigned to it for common rotation about the unbalance axis of rotation (U) of this unbalance mass (30₁, 30₂), or/and **in that** the unbalance axis of rotation (U) of at least one unbalanced mass (30₁, 30₂), preferably each unbalanced mass (30₁, 30₂), is eccentric or/and parallel to the roller axis of rotation (W).

3. The ground processing roller as claimed in claim 1 or 2,
**characterized in that** a lubricant collecting unit (118) which is open at the top in the height direction (H) is provided above the roller axis of rotation (W) in the height direction (H), and **in that** a lubricant flow connection (122) is provided between the lubricant collecting unit (118) and the second lubricant sump (112) for directing lubricant collected in the lubricant collecting unit (118) into the second lubricant sump (112),
preferably wherein the lubricant collecting unit (118) comprises a trough-like lubricant collecting element (120), which preferably widens like a funnel in the height direction.

4. The ground processing roller as claimed in any one of claims 1-3, **characterized in that** the roller shell (24) is rotatably supported on a support arrangement (42) about the roller axis of rotation (W), wherein the support arrangement (42) has a rotatable support arrangement part (46) which is non-rotatably connected to the roller shell (24) and a rotatable support arrangement part (46) rotatably supporting the fixed support arrangement part (44), wherein the first lubricant sump (110) and the second lubricant sump (112) are provided in a support arrangement interior (98) formed in the support arrangement (42), preferably wherein the first lubricant sump (110) is substantially completely provided in the rotatable support arrangement part (46), or/and **in that** the second lubricant sump (112) is substantially completely provided in the fixed support arrangement part (44).

5. The ground processing roller as claimed in claim 4,
**characterized in that**
the unbalanced masses (30₁, 30₂) are supported on the rotatable support arrangement part (46) such that they can rotate about their unbalanced axes of rotation (U),
or/and
**in that** the at least one drive gear (66, 94) and the driven gears (68₁, 68₂) are arranged in a first region (102) of the support arrangement interior (98) formed substantially in the rotatable support arrangement part (46).

6. The ground processing roller as claimed in claim 5,
**characterized in that** a driven gear (68₁, 68₂) positioned in the height direction (H) below the roller axis of rotation (W) is at least partially positioned in the first lubricant sump (110).

7. The ground processing roller as claimed in any one of claims 4-6, if referring back to claim 3,
**characterized in that** the lubricant collecting unit (118) is provided on the fixed support arrangement part (44), and **in that** the lubricant flow connection (122) is formed in the fixed support arrangement part (44) or/and is formed substantially in the second region (104) of the support arrangement interior (98) formed in the fixed support arrangement part (44).

8. The ground processing roller as claimed in claim 7,
**characterized in that** a limiting element (106) delimiting the second lubricant sump (112) in the direction of the roller axis of rotation (W) is provided on the fixed support arrangement part (44), and **in that** at least one lubricant passage opening (108) of the overflow connection (114) is provided in the limiting element (106), preferably wherein the roller axis of rotation (W) passes through the lubricant passage opening (108), or/and the lubricant passage opening (108) is arranged substantially concentrically to the roller axis of rotation (W).

9. The ground processing roller as claimed in any one of claims 1-8,
**characterized in that** the unbalance transmission system (96) can comprise two drive gears (66, 94) and an unbalance transmission unit (72), wherein at least one of the drive gears (66, 94) can be driven to rotate by the unbalance motor (54) via the unbalance transmission unit (72).

10. The ground processing roller as claimed in claim 9,
**characterized in that** one of the drive gears (66, 94) can be driven by the unbalance motor (54) via the unbalance transmission unit (72) to rotate about a drive gear axis of rotation (A) that is preferably concentric with the roller axis of rotation (W), and another of the drive gears (66, 94) can be driven directly by the unbalance motor (54) to rotate about the drive gear axis of rotation (A),
preferably wherein the unbalance transmission unit (72) can be configured as a rotational position adjustment gear, wherein the unbalance transmission unit (72) can adjust a rotational position of the one of the drive gears (66, 94) about the drive gear axis of rotation (A) with respect to a rotational position of the other of the drive gears (66, 94) about the drive gear axis of rotation (A), preferably wherein the unbalance transmission unit (72) comprises a planetary gear.

11. The ground processing roller as claimed in any one of claims 9 or 10, if referring back to claim 4,
**characterized in that** the unbalance transmission unit (72) is arranged in the second region (104) of the support arrangement interior (98) which is substantially formed in the fixed support arrangement part (44).

12. The ground processing roller as claimed in claim 11, if referring back to claim 4,
**characterized in that** a part of the unbalance transmission unit (72) positioned in the height direction (H) below the roller axis of rotation (W) is at least partially positioned in the second lubricant sump (112).

13. The ground processing roller as claimed in any one of claims 1-12,
**characterized in that** the lubricant conveying arrangement (116) comprises at least one driven gear (68₁, 68₂), preferably all driven gears (68₁, 68₂), or/and at least one drive gear (66, 94), preferably all drive gears (66, 94).

14. The ground processing roller as claimed in claim 4 or in any one of claims 5-13, if referring back to claim 4,
**characterized in that** the lubricant conveying arrangement (116) comprises a plurality of conveying projections (115) provided on the rotatable support arrangement part (46).

15. A ground processing machine, preferably a soil compactor, comprising at least one ground processing roller (22) as claimed in any one of claims 1-14.

## Revendications

1. Un rouleau de traitement du sol, en particulier pour un compacteur de sol, comprenant :
- une enveloppe de rouleau (24) qui peut tourner autour d'un axe de rotation du rouleau (W) et entoure un intérieur de rouleau (26),
- un dispositif de balourd (28) avec une pluralité de masses de balourd (30₁, 30₂) disposées à une certaine distance les unes des autres sur la circonférence autour de l'axe de rotation du rouleau (W), dans lequel chaque masse de balourd (30₁, 30₂) peut être entraînée en rotation autour d'un axe de rotation de balourd (U) qui lui est associé,
- un entraînement de balourd (59) avec un moteur de balourd (58) et un système de transmission de balourd (96), dans lequel le système de transmission de balourd (96) comprend au moins un engrenage d'entraînement (66, 94) pouvant être entraîné en rotation par le moteur de balourd (58) et, en association avec chaque masse de balourd (30₁, 30₂), un engrenage entraîné (68₁, 68₂) relié à celui-ci pour une rotation commune, dans lequel chaque engrenage d'entraînement (66, 94) est couplé à au moins un engrenage entraîné (68₁, 68₂) pour la transmission du couple,
- un premier boîtier de lubrifiant (110) disposé dans le sens de la hauteur (H) sous l'axe de rotation du rouleau (W), dans lequel le premier boîtier de lubrifiant (110) est rempli ou peut être rempli de lubrifiant jusqu'à un premier niveau de boîtier de lubrifiant (N₁) qui se trouve à une première distance (D₁) de l'axe de rotation du rouleau (W) dans le sens de la hauteur (H),
- un deuxième boîtier de lubrifiant (112) disposé dans le sens de la hauteur (H) sous l'axe de rotation du rouleau (W), dans lequel le deuxième boîtier de lubrifiant (112) est rempli ou peut être rempli de lubrifiant jusqu'à un deuxième niveau de boîtier de lubrifiant (N₂) qui se trouve à une deuxième distance (D₂) de l'axe de rotation du rouleau (W) dans le sens de la hauteur (H), dans lequel la deuxième distance (D₂) est inférieure à la première distance (D₁),
**caractérisé par** :
- un dispositif de transport de lubrifiant (116) pour transporter le lubrifiant du premier boîtier de lubrifiant (110) au deuxième boîtier de lubrifiant (112),
- un raccord de trop-plein (114) entre le premier boîtier de lubrifiant (110) et le deuxième boîtier de lubrifiant (112), dans lequel le lubrifiant s'écoule du deuxième boîtier de lubrifiant (112) via le raccord de trop-plein (114) dans le premier boîtier de lubrifiant (110) lors du fonctionnement de transport du dispositif de transport de lubrifiant (116) lorsque le niveau du deuxième boîtier de lubrifiant (N₂) dans le deuxième boîtier de lubrifiant (112) est atteint ou/et dépassé.

2. Le rouleau de traitement du sol selon la revendication 1,
**caractérisé en ce qu'**au moins un engrenage d'entraînement (66, 94), de préférence chaque engrenage d'entraînement (66, 94), est en prise avec au moins un engrenage entraîné (68₁, 68₂), ou/et **en ce qu'**au moins un engrenage entraîné (68₁, 68₂), de préférence chaque engrenage entraîné (68₁, 68₂), est reliée à la masse de balourd (30₁, 30₂) qui lui est affectée pour une rotation commune autour de l'axe de rotation de balourd (U) de cette masse de balourd (30₁, 30₂), ou/et **en ce que** l'axe de rotation de balourd (U) d'au moins une masse de balourd (30₁, 30₂), de préférence chaque masse de balourd (30₁, 30₂), est excentrique et/ou parallèle à l'axe de rotation du rouleau (W).

3. Le rouleau de traitement du sol selon la revendication 1 ou 2,
**caractérisé en ce qu**'une unité de collecte de lubrifiant (118) ouverte en haut dans le sens de la hauteur (H) est prévue au-dessus de l'axe de rotation du rouleau (W) dans le sens de la hauteur (H), et en ce qu'une connexion d'écoulement de lubrifiant (122) est prévue entre l'unité de collecte de lubrifiant (118) et le deuxième boîtier de lubrifiant (112) pour diriger le lubrifiant collecté dans l'unité de collecte de lubrifiant (118) dans le deuxième boîtier de lubrifiant (112),
de préférence dans lequel l'unité de collecte de lubrifiant (118) comprend un élément de collecte de lubrifiant en forme d'auge (120), qui s'élargit de préférence comme un entonnoir dans le sens de la hauteur.

4. Le rouleau de traitement du sol selon l'une des revendications 1 à 3,
**caractérisé en ce que** l'enveloppe de rouleau (24) est supportée de manière rotative sur un dispositif de support (42) autour de l'axe de rotation du rouleau (W), dans lequel le dispositif de support (42) comporte une partie de dispositif de support rotative (46) qui est reliée de manière non rotative à l'enveloppe de rouleau (24) et une partie de dispositif de support rotative (46) supportant de manière rotative la partie de dispositif de support fixe (44), dans lequel le premier boîtier de lubrifiant (110) et le deuxième boîtier de lubrifiant (112) sont prévus dans un intérieur du dispositif de support (98) formé dans le dispositif de support (42),
de préférence dans lequel le premier boîtier de lubrifiant (110) est sensiblement complètement prévu dans la partie de dispositif de support rotative (46), ou/et dans lequel le deuxième boîtier de lubrifiant (112) est sensiblement complètement prévu dans la partie fixe (44) du dispositif de support.

5. Le rouleau de traitement du sol selon la revendication 4,
**caractérisé en ce que**
les masses de balourd (30₁, 30₂) sont supportées sur la partie de dispositif de support rotative (46) de telle sorte qu'elles peuvent tourner autour de leurs axes de rotation non équilibrés (U),
ou/et
**en ce que** le ou les engrenages d'entraînement (66, 94) et les engrenages entraînés (68₁, 68₂) sont disposés dans une première zone (102) de l'intérieur du dispositif de support (98) formé essentiellement dans la partie de dispositif de support rotative (46).

6. Le rouleau de traitement du sol selon la revendication 5,
**caractérisé en ce qu'**un engrenage entraîné (68₁, 68₂) positionné dans le sens de la hauteur (H) sous l'axe de rotation du rouleau (W) est au moins partiellement positionné dans le premier boîtier de lubrifiant (110).

7. Le rouleau de traitement du sol selon l'une des revendications 4 à 6, si l'on se réfère à la revendication 3,
**caractérisé en ce que** l'unité de collecte de lubrifiant (118) est prévue sur la partie de dispositif de support fixe (44), et **en ce que** la connexion d'écoulement de lubrifiant (122) est formé dans la partie de dispositif de support fixe (44) ou/et est formé sensiblement dans la deuxième zone (104) de l'intérieur du dispositif de support (98) formé dans la partie de dispositif de support fixe (44).

8. Le rouleau de traitement du sol selon la revendication 7,
**caractérisé en ce qu'**un élément de limitation (106) délimitant le deuxième boîtier de lubrifiant (112) dans le sens de l'axe de rotation du rouleau (W) est prévu sur la partie fixe du dispositif de support (44), et **en ce qu'**au moins une ouverture de passage de lubrifiant (108) du raccord de trop-plein (114) est prévue dans l'élément de limitation (106),
de préférence dans lequel l'axe de rotation du rouleau (W) passe à travers l'ouverture de passage de lubrifiant (108), ou/et l'ouverture de passage de lubrifiant (108) est disposée sensiblement concentriquement à l'axe de rotation du rouleau (W).

9. Le rouleau de traitement du sol selon l'une des revendications 1 à 8,
**caractérisé en ce que** le système de transmission de balourd (96) peut comprendre deux engrenages d'entraînement (66, 94) et une unité de transmission de balourd (72), dans lequel au moins l'un des engrenages d'entraînement (66, 94) peut être entraîné en rotation par le moteur de balourd (54) via l'unité de transmission de balourd (72).

10. Le rouleau de traitement du sol selon la revendication 9,
**caractérisé en ce que** l'un des engrenages d'entraînement (66, 94) peut être entraîné par le moteur de balourds (54) via l'unité de transmission de balourds (72) pour tourner autour d'un axe de rotation d'engrenage d'entraînement (A) qui est de préférence concentrique à l'axe de rotation du rouleau (W), et un autre des engrenages d'entraînement (66, 94) peut être entraîné directement par le moteur de balourds (54) pour tourner autour de l'axe de rotation (A) de l'engrenage d'entraînement,
de préférence dans lequel l'unité de transmission de balourd (72) peut être configurée comme un engrenage d'ajustement de position de rotation, dans lequel l'unité de transmission de balourd (72) peut ajuster une position de rotation de l'un des engrenages d'entraînement (66, 94) autour de l'axe de rotation de l'engrenage d'entraînement (A) par rapport à une position de rotation de l'autre des engrenages d'entraînement (66, 94) autour de l'axe de rotation de l'engrenage d'entraînement (A), de préférence dans lequel l'unité de transmission de balourd (72) comprend un engrenage planétaire.

11. Le rouleau de traitement du sol selon l'une des revendications 9 ou 10, si l'on se réfère à la revendication 4,
**caractérisé en ce que** l'unité de transmission de balourd (72) est disposée dans la deuxième zone (104) de l'intérieur du dispositif de support (98) qui est sensiblement formé dans la partie fixe du dispositif de support (44).

12. Le rouleau de traitement du sol selon la revendication 11, si l'on se réfère à la revendication 4,
**caractérisé en ce qu'**une partie de l'unité de transmission de balourd (72) positionnée sous l'axe de rotation du rouleau (W) dans le sens de la hauteur (H) est positionnée au moins partiellement dans le deuxième boîtier de lubrifiant (112).

13. Le rouleau de traitement du sol selon l'une des revendications 1 à 12,
**caractérisé en ce que** le dispositif de transport de lubrifiant (116) comprend au moins un engrenage entraîné (68₁, 68₂), de préférence tous les engrenages entraînés (68₁, 68₂), et/ou au moins un engrenage d'entraînement (66, 94), de préférence tous les engrenages d'entraînement (66, 94).

14. Le rouleau de traitement du sol selon la revendication 4 ou l'une des revendications 5 à 13, si l'on se réfère à la revendication 4,
**caractérisé en ce que** le dispositif de transport de lubrifiant (116) comprend une pluralité de saillies de transport (115) prévues sur la partie de dispositif de support rotative (46).

15. Machine de traitement du sol, de préférence un compacteur de sol, comprenant au moins un rouleau de traitement du sol (22) selon l'une des revendications 1 à 14
